# EUROPEAN PATENT APPLICATION

(11) **EP 4 836 242 A1**
(43) Date of publication of application: **04.11.2026**
(21) Application number: 24911226.9
(22) Date of filing: 25.12.2024
(51) Int. Cl.: H02K 1/14, H02K 1/18, H02K 41/02

(54) **STATOR ASSEMBLY OF LINEAR MOTOR, LINEAR MOTOR, SUSPENSION APPARATUS, AND VEHICLE**

(30) Priority: 29.12.2023 CN 202311872132
(71) Applicant: BYD Company Limited, Shenzhen, Guangdong 518118 (CN)
(72) Inventor: SUN, Xianmeng, Shenzhen, Guangdong 518118 (CN); LIAO, Yinsheng, Shenzhen, Guangdong 518118 (CN); ZHANG, Feng, Shenzhen, Guangdong 518118 (CN); ZHU, Ning, Shenzhen, Guangdong 518118 (CN); CHANG, Chao, Shenzhen, Guangdong 518118 (CN)
(74) Representative: Mathys & Squire
(86) International application number: PCT/CN2024/142275
(87) International publication number: WO 2025/140302

(57) **Abstract**

A stator assembly (400) for a linear motor, a linear motor, a suspension apparatus (500), and a vehicle are disclosed. The stator assembly (400) includes a plurality of layers of stator cores (200), the plurality of layers of stator cores (200) are sequentially stacked in an axial direction of the stator assembly (400), each of the stator cores (200) includes a stator body (204) and a tooth crown structure (30), the tooth crown structure (30) is disposed on an outer circumferential wall of the stator body (204), and the tooth crown structure (30) and the stator body (204) jointly define a slot structure (206) used for mounting a winding coil (300).

## Description

### CROSS-REFERENCES TO RELATED APPLICATIONS

This application is proposed based on and claims priority to Chinese Patent Application No. 202311872132.9, filed on December 29, 2023, which is incorporated herein by reference in its entirety.

### TECHNICAL FIELD

This application relates to the field of motor technologies, and in particular, to a stator assembly of a linear motor, a linear motor, a suspension apparatus, and a vehicle.

### BACKGROUND

In related technologies, because a stator assembly of a linear motor includes a plurality of stator cores and the plurality of stator cores are stacked, two stator cores are inevitably located at the ends, which generates end stress. In addition, winding grooves are provided on the surfaces of the stator core, which generates cogging force. The end stress and the cogging force are collectively referred to as magnetic resistance. The magnetic resistance is a significant factor causing periodic fluctuation in thrust of the linear motor and a major bottleneck limiting application of the linear motor, and affects operating performance of the linear motor.

### SUMMARY

This application aims to resolve at least one of technical problems existing in the conventional technologies. An objective of this application is to propose a stator assembly for a linear motor. A tooth crown structure is disposed on an outer circumferential wall of a stator body, so that magnetic resistance can be reduced. This can reduce thrust fluctuation of the linear motor, to improve operating performance of the linear motor.

This application further proposes a linear motor.

This application further proposes a suspension apparatus.

This application further proposes a vehicle.

The stator assembly for the linear motor according to this application includes:
a plurality layers of stator cores, the plurality layers of stator cores being sequentially stacked in an axial direction of the stator assembly, each of the stator cores including a stator body and a tooth crown structure, the tooth crown structure being disposed on an outer circumferential wall of the stator body, and the tooth crown structure and the stator body jointly defining a slot structure used for mounting a winding coil.

In the stator assembly for the linear motor according to this application, the tooth crown structure is disposed on the outer circumferential wall of the stator body, so that magnetic resistance can be reduced. This can reduce thrust fluctuation of the linear motor, to improve operating performance of the linear motor.

The linear motor according to this application includes the foregoing stator assembly.

In the linear motor according to this application, the tooth crown structure is disposed on the outer circumferential wall of the stator body, so that magnetic resistance can be reduced. This can reduce thrust fluctuation of the linear motor, to improve operating performance of the linear motor.

The suspension apparatus according to this application includes the foregoing linear motor.

In the suspension apparatus according to this application, the linear motor is disposed on the suspension apparatus, so that magnetic resistance can be reduced. This can reduce thrust fluctuation of the linear motor, to improve operating performance of the linear motor, so as to improve operating performance of the suspension apparatus.

The vehicle according to this application includes the foregoing linear motor.

The vehicle according to this application includes the suspension apparatus, so that performance of the vehicle can be improved.

Additional aspects and advantages of this application are in part described below and in part become apparent in the following descriptions or are learned through practice of this application.

### BRIEF DESCRIPTION OF DRAWINGS

FIG. 1 is a schematic diagram of a suspension apparatus according to an embodiment of this application;
FIG. 2 is a schematic assembly diagram of a stator assembly, a stator insulation framework, and a winding coil according to an embodiment of this application;
FIG. 3 is a schematic assembly diagram of an intermediate stator core, a stator insulation framework, and a winding coil according to an embodiment of this application;
FIG. 4 is a schematic diagram of an end stator core according to an embodiment of this application;
FIG. 5 is a schematic diagram of another end stator core according to an embodiment of this application;
FIG. 6 is a schematic diagram of a plurality of stacked intermediate stator cores according to an embodiment of this application;
FIG. 7 is a front view of a plurality of stacked stator bodies according to an embodiment of this application; and
FIG. 8 is a schematic diagram of a tooth crown structure according to an embodiment of this application.

### DESCRIPTION OF EMBODIMENTS

The following describes in detail embodiments of this application, and examples of embodiments are shown in accompanying drawings, where same or similar reference numerals throughout represent same or similar elements or elements having same or similar functions. The embodiments described below with reference to the accompanying drawings are examples and are merely used to explain this application, and shall not be construed as a limitation on this application.

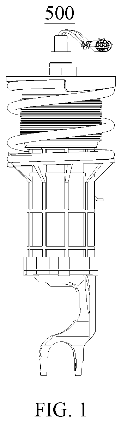

A stator assembly 400 for a linear motor according to embodiments of this application is described below with reference to FIG. 1 to FIG. 8. The linear motor may be a cylindrical three-phase permanent magnet synchronous linear motor. The linear motor includes a stator core 200, a stator insulation framework 100, and a winding coil 300. The stator insulation framework 100 is mounted on the stator core 200 of the linear motor. The winding coil 300 of the linear motor is disposed on the stator insulation framework 100. The stator insulation framework 100 and the stator core 200 are assembled in a superposition configuration. When the stator insulation framework 100 and the stator core 200 are assembled, the stator insulation framework 100 is superposed on the stator core 200.

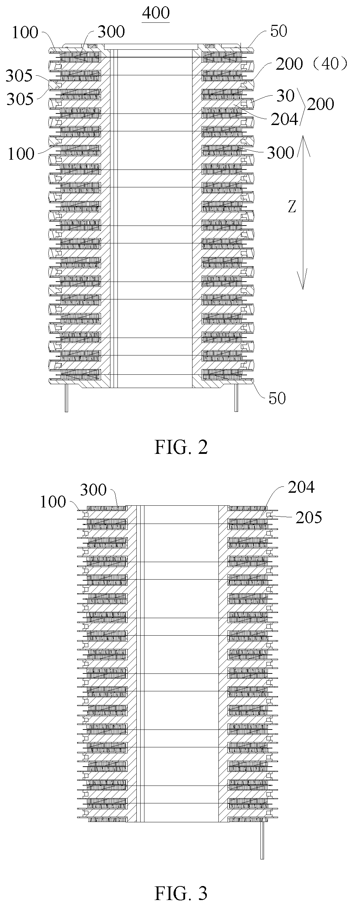

As shown in FIG. 2, the stator assembly 400 for the linear motor according to embodiments of this application includes a plurality of layers of stator cores 200, the plurality of layers of stator cores 200 are sequentially stacked in an axial direction of the stator assembly 400, each of the stator cores 200 includes a stator body 204 and a tooth crown structure 30, the tooth crown structure 30 is disposed on an outer circumferential wall of the stator body 204, and the tooth crown structure 30 and the stator body 204 jointly define a slot structure 206 used for mounting the winding coil 300.

The stator core 200 is an intermediate stator core 40 of the stator assembly 400. When the stator assembly 400 is placed in a direction shown in FIG. 2, the axial direction of the stator assembly 400 is a Z direction shown in FIG. 2. The plurality of layers of stator cores 200 are sequentially stacked in the axial direction of the stator assembly 400, each stator core 200 includes the stator body 204 and the tooth crown structure 30, and the tooth crown structure 30 is disposed on the outer circumferential wall of the stator body 204. In some embodiments, the tooth crown structure 30 is bonded to the stator body 204, or the tooth crown structure 30 is snap-fitted to the stator body 204. However, this application is not limited thereto, and the tooth crown structure 30 and the stator body 204 may alternatively be connected in other ways, provided that the tooth crown structure 30 can be fastened to the stator body 204. The tooth crown structure 30 and the stator body 204 jointly define the slot structure 206 used for mounting the winding coil 300. Specifically, the winding coil 300 is disposed on the stator insulation framework 100, the stator insulation framework 100 is mounted in the slot structure 206, and the winding coil 300 is mounted in the slot structure 206 through the stator insulation framework 100.

In the axial direction of the stator assembly, because a quantity of stator cores of the linear motor cannot be infinite, two stator cores are inevitably located at the ends, which generates end stress. In addition, providing slot structures on surfaces of the stator core (that is, the intermediate stator core) and the end stator core generates cogging force. The end stress and the cogging force are collectively referred to as magnetic resistance. The magnetic resistance is a significant factor causing periodic fluctuation in thrust of the linear motor and a major bottleneck limiting application of the linear motor, especially in aspects such as motion control and high-precision application.

In this application, the tooth crown structure 30 of the stator core 200 is disposed on the outer circumferential wall of the stator body 204, so that magnetic resistance can be reduced, to reduce adverse impact of thrust fluctuation on the linear motor. This can reduce thrust fluctuation of the linear motor, to improve operating performance of the linear motor.

The tooth crown structure 30 of the stator core 200 is disposed on the outer circumferential wall of the stator body 204, so that magnetic resistance can be reduced. This can reduce thrust fluctuation of the linear motor, to improve operating performance of the linear motor.

In some embodiments of this application, as shown in FIG. 2 and FIG. 3, stator bodies 204 of the plurality of stator cores 200 are formed as an integral part, and the stator body 204 is detachably connected to the tooth crown structure 30.

The stator body 204 and the tooth crown structure 30 of the stator core 200 may be fastened together through a snap-fit, or the stator body 204 and the tooth crown structure 30 of the stator core 200 may be fastened together through a bolt. However, this application is not limited thereto, provided that the stator body 204 and the tooth crown structure 30 of the stator core 200 are detachably connected. In the axial direction of the stator assembly 400, the stator core 200 is located between two end stator cores 50. In consideration of winding, the stator body 204 and the tooth crown structure 30 of the intermediate stator core 40 are detachably connected. After the winding coil 300 is assembled on the corresponding stator insulation framework 100 through winding and the stator insulation framework 100 is mounted on the stator body 204 of the corresponding stator core 200, the stator insulation framework 100 may be injection molded in the slot structure 206 of the stator core 200, and the tooth crown structure 30 is assembled to the corresponding stator body 204, to complete assembly of the stator core 200, the stator insulation framework 100, and the winding coil 300. The stator body 204 and the tooth crown structure 30 of the stator core 200 are detachably connected, so that the winding coil 300 can be conveniently wound around the corresponding stator insulation framework 100, to improve efficiency in producing the stator assembly 400 and the linear motor.

In some embodiments of this application, as shown in FIG. 2 and FIG. 3, the tooth crown structure 30 and the stator body 204 jointly define two slot structures 206, and in the axial direction of the stator assembly 400, the two slot structures 206 are respectively located on two sides of the stator core 200. The tooth crown structure 30 and the stator body 204 of the stator core 200 jointly define the two slot structures 206. In the axial direction of the stator assembly 400, one slot structure 206 is located on one side of the stator core 200, and the other slot structure 206 is located on the other side of the stator core 200. The stator insulation framework 100 may be positioned in each of the two slot structures 206 of the stator core 200, so that the winding coil 300 can be disposed in each of the two slot structures 206 of the stator core 200. In this way, a plurality layers of winding coils 300 can be mounted on one stator core 200. This can increase space utilization of the stator assembly 400, and can also increase a slot fill factor of the stator assembly 400.

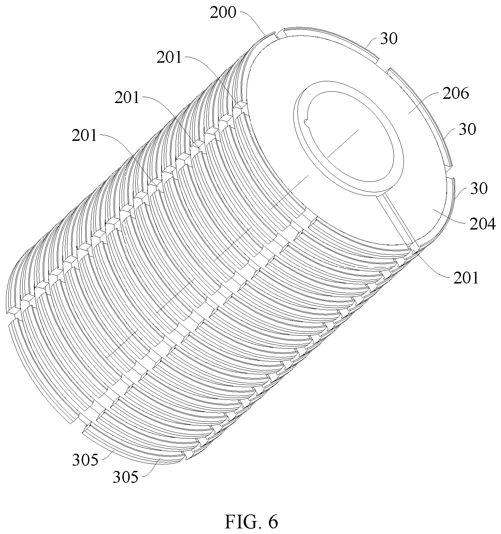

In some embodiments of this application, as shown in FIG. 6 to FIG. 8, the tooth crown structure 30 includes a tooth-crown main body 301 and a mounting boss 302 that are connected, the mounting boss 302 is located on a surface of the tooth-crown main body 301 facing the stator body 204, the outer circumferential wall of the stator body 204 has a mounting groove 205, the mounting boss 302 is fitted into the mounting groove 205, and the tooth-crown main body 301 and the stator body 204 jointly define the slot structure 206.

The tooth crown structure 30 may be arc-shaped. In an example, the tooth crown structure 30 may be in the shape of a circular arc, a central angle corresponding to the tooth crown structure 30 may be 60°, and the tooth crown structure 30 is disposed around the stator body 204 in a circumferential direction of the corresponding stator body 204. The tooth crown structure 30 includes the tooth-crown main body 301 and the mounting boss 302 that are connected. The tooth-crown main body 301 and the mounting boss 302 may be integrally formed, or the tooth-crown main body 301 and the mounting boss 302 are connected through a snap-fit. In a radial direction of the stator core 200, the mounting boss 302 is located on the surface of the tooth-crown main body 301 facing the stator body 204, and the outer circumferential wall of the stator body 204 has the mounting groove 205. In the radial direction of the stator core 200, an end of the mounting groove 205 facing the tooth crown structure 30 is open. The mounting boss 302 is fitted into the mounting groove 205 from the open end of the mounting groove 205, establishing a nested fit between the mounting boss 302 and the mounting groove 205, and therefore the mounting boss 302 can be embedded in the mounting groove 205, to fasten the tooth crown structure 30 to the stator body 204.

In some embodiments of this application, the surface of the tooth-crown main body 301 facing the stator body 204 abuts against the outer circumferential wall of the stator body 204. In the radial direction of the stator core 200, the surface of the tooth-crown main body 301 facing the stator body 204 is in contact with the outer circumferential wall of the stator body 204, so that the tooth crown structure 30 and the corresponding stator body 204 can be assembled compactly. This helps reduce a volume of the stator core 200, and therefore helps reduce a volume of the stator assembly 400.

In some embodiments of this application, as shown in FIG. 6 to FIG. 8, the tooth-crown main body 301 includes a first main body 303 and a second main body 304, the first main body 303 is connected between the mounting boss 302 and the second main body 304, and in the axial direction of the stator assembly 400, each of two sides of the second main body 304 protrudes from the first main body 303.

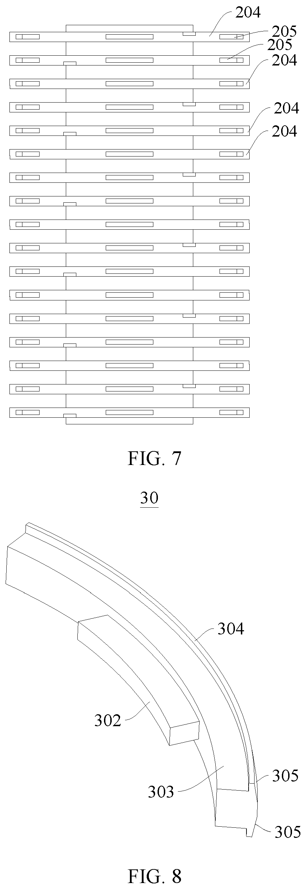

As shown in FIG. 2 and FIG. 8, the first main body 303 is located between the mounting boss 302 and the second main body 304, the mounting boss 302, the first main body 303, and the second main body 304 may be integrally formed, and in the axial direction of the stator assembly 400, each of the two sides of the second main body 304 protrudes from the first main body 303. When the tooth crown structure 30 is mounted on the stator body 204, with each of the two sides of the second main body 304 protruding from the first main body 303, the tooth crown structure 30 and the stator body 204 can jointly define two slot structures 206, so that a structural design of the tooth crown structure 30 is appropriate.

In some embodiments of this application, as shown in FIG. 6 to FIG. 8, in the axial direction of the stator assembly 400, the first main body 303 is located in an intermediate part of the second main body 304.

In the axial direction of the stator assembly 400, the first main body 303 is assembled to an intermediate position of the second main body 304. In an example, the first main body 303 is assembled to a middle position of the second main body 304 in the axial direction of the stator assembly 400. When the tooth crown structure 30 is mounted on the stator body 204, this arrangement helps form slot structures 206 with the same structure and shape on two sides of the stator core 200, to improve structural consistency of the stator core 200.

In some embodiments of this application, as shown in FIG. 2, FIG. 4, and FIG. 5, the end stator core 50 may also include a stator body 204 and a tooth crown structure 30, and the stator body 204 and the tooth crown structure 30 are integrally formed.

In the axial direction of the stator assembly 400, the plurality of stator cores 200 are located between the two end stator cores 50, and in the axial direction of the stator assembly 400, the two end stator cores 50 are respectively located at two ends of the stator cores 200. The two end stator cores 50 are a tail end core and a start end core. Because the tail end core and the start end core are relatively thin, the tail end core and the start end core are manufactured as unit modules. The tail end core and the start end core are integral modules. In other words, the stator body 204 and the tooth crown structure 30 of the end stator core 50 are integrally formed.

It will be noted that, in the axial direction of the stator assembly 400, a slot structure 206 is formed on a surface of the end stator core 50 facing the intermediate stator core 40 (that is, the stator core 200), and one slot structure 206 is formed on the end stator core 50. When the end stator core 50, a stator insulation framework 100, and a winding coil 300 are assembled, the stator insulation framework 100 is first assembled on the end stator core 50, and then the winding coil 300 is assembled on the stator insulation framework 100. Integrally forming the stator body 204 and the tooth crown structure 30 of the end stator core 50 can improve structural strength of the end stator core 50.

Further, structures of the two end stator cores 50 may be the same or substantially the same. Structures of the plurality of intermediate stator cores 40 are the same. This helps reduce difficulty in manufacturing the stator assembly 400, and can improve efficiency in producing the stator assembly 400.

In some embodiments of this application, as shown in FIG. 2, FIG. 4, and FIG. 5, the tooth crown structure 30 and the stator body 204 of the end stator core 50 jointly define one slot structure 206, and in the axial direction of the stator assembly 400, the slot structure 206 is located on the end stator core 50 facing an adjacent intermediate stator core 40. Because the winding coil 300 is disposed on one side of the end stator core 50, jointly defining one slot structure 206 by the tooth crown structure 30 and the stator body 204 of the end stator core 50 can meet a requirement for use of the end stator core 50. This can reduce difficulty in manufacturing the end stator core 50, and can also help improve structural strength of the end stator core 50.

In some embodiments of this application, in the radial direction of the stator core 200, an axial size of at least a part of an outer circumferential wall of the tooth crown structure 30 gradually decreases from inside to outside. In the radial direction of the stator core 200, an outer side wall of the second main body 304 facing away from the first main body 303 is the outer circumferential wall of the tooth crown structure 30. In the radial direction of the stator core 200, a longitudinal section size of at least a part of the outer circumferential wall of the tooth crown structure 30 gradually decreases from inside to outside, so that magnetic resistance can be further reduced, to further reduce adverse impact of thrust fluctuation on the linear motor. This can further reduce thrust fluctuation of the linear motor, to further improve operating performance of the linear motor, and can reduce the weight of the stator core 200, which is conducive to a lightweight design of the stator assembly 400.

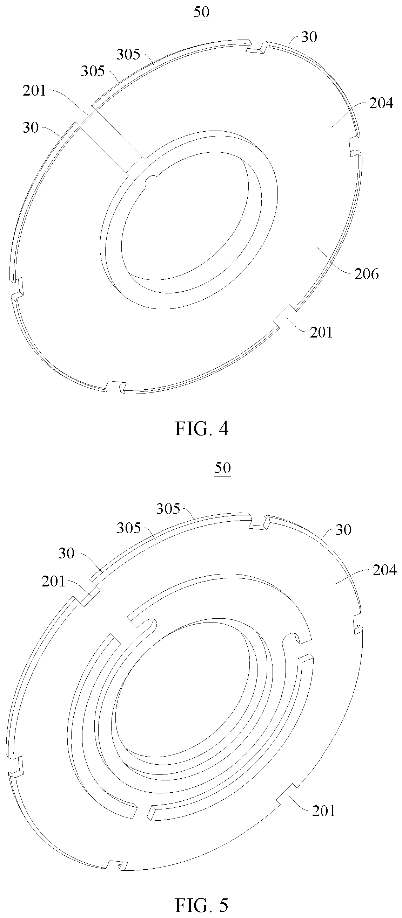

In some embodiments of this application, as shown in FIG. 4, FIG. 5, FIG. 6, and FIG. 8, the outer circumferential wall of the tooth crown structure 30 is provided with a cut structure 305. It will be noted that an outer circumferential wall of the tooth crown structure 30 of the intermediate stator core 40 is provided with a cut structure 305, and an outer circumferential wall of the tooth crown structure 30 of the end stator core 50 may also be provided with a cut structure 305. In this application, the following example is used for description: cut structures 305 are provided on both the outer circumferential wall of the tooth crown structure 30 of the stator core 200 and the outer circumferential wall of the tooth crown structure 30 of the end stator core 50. The cut structure 305 is provided, so that magnetic resistance can be further reduced, to further reduce adverse impact of thrust fluctuation on the linear motor. This can further reduce thrust fluctuation of the linear motor, to further improve operating performance of the linear motor, and can reduce the weight of the stator core 200, which is conducive to the lightweight design of the stator assembly 400.

In some embodiments of this application, as shown in FIG. 4, FIG. 5, FIG. 6, and FIG. 8, there may be a plurality of cut structures 305, and the plurality of cut structures 305 are arranged in the axial direction of the stator assembly 400.

An outer circumferential wall of the tooth crown structure 30 of each stator core 200 may be provided with a plurality of cut structures 305, and the plurality of cut structures 305 of each stator core 200 are sequentially arranged in the axial direction of the stator assembly 400. Each stator core 200 is provided with the plurality of cut structures 305, so that magnetic resistance can be further reduced, to further reduce adverse impact of thrust fluctuation on the linear motor. This can further reduce thrust fluctuation of the linear motor, to further improve operating performance of the linear motor, and can further reduce the weight of the stator core 200, which is more conducive to the lightweight design of the stator assembly 400.

In some embodiments of this application, as shown in FIG. 4, FIG. 5, FIG. 6, and FIG. 8, there are two cut structures 305, and in the axial direction of the stator assembly 400, the two cut structures 305 are respectively provided close to edges of the tooth crown structure 30.

The outer circumferential wall of the tooth crown structure 30 of each stator core 200 is provided with two cut structures 305, and in the axial direction of the stator assembly 400, the two cut structures 305 are respectively provided close to edges of the corresponding tooth crown structure 30. The two cut structures 305 of the tooth crown structure 30 of the stator core 200 are provided close to the edges of the corresponding tooth crown structure 30 in the axial direction of the stator assembly 400, so that the two cut structures 305 can be symmetrically provided on the corresponding tooth crown structure 30. In this way, different positions of the stator assembly 400 experience identical or substantially identical magnetic resistance, so that uniformity of force acting on the stator assembly 400 can be enhanced.

In some embodiments of this application, there are a plurality of tooth crown structures 30, and the plurality of tooth crown structures 30 are disposed around the stator body 204 in the circumferential direction of the stator body 204.

Each stator core 200 includes a plurality of tooth crown structures 30, and each stator core 200 may include two, three, four, five, or six tooth crown structures 30, or the like. In this application, an example in which each stator core 200 includes six tooth crown structures 30 is used for description. The plurality of tooth crown structures 30 are disposed around the stator body 204 in the circumferential direction of the corresponding stator body 204, so that magnetic resistance can be further reduced, to further reduce adverse impact of thrust fluctuation on the linear motor. This can further reduce thrust fluctuation of the linear motor, to further improve operating performance of the linear motor, and can further reduce the weight of the stator core 200, which is more conducive to the lightweight design of the stator assembly 400.

In some embodiments of this application, in the circumferential direction of the stator body 204, the plurality of tooth crown structures 30 are disposed around the stator body 204 in the circumferential direction of the corresponding stator body 204, and at least two adjacent tooth crown structures 30 are spaced apart to form an assembly space 201 between the two adjacent tooth crown structures 30. In an example, two adjacent tooth crown structures 30 are all spaced apart, every two tooth crown structures 30 are spaced apart at the same angle in the circumferential direction of the stator body 204, an assembly space 201 is formed between any two adjacent tooth crown structures 30, and the assembly space 201 is for routing and wiring of winding coils 300. After the plurality of layers of stator cores 200 are sequentially stacked in the axial direction of the stator assembly 400, assembly spaces 201 of the plurality of stator cores 200 are arranged in a one-to-one correspondence in the axial direction of the stator assembly 400. The assembly spaces 201 serve as reserved spaces for wiring of winding coils 300, connection to an external power supply, and coil routing, to facilitate wiring and routing of the winding coils 300 on the stator assembly 400.

Further, in consideration of routing and wiring of winding coils 300, six assembly spaces 201 are formed in a circumferential direction of the tail end core and the start end core. Then, the tail end core and the start end core are superposed on the stator cores 200 in the axial direction of the stator assembly 400, to complete manufacturing of the entire stator assembly 400.

In some embodiments of this application, the stator body 204 and the tooth crown structure 30 of the stator core 200 are detachably connected. The stator body 204 and the tooth crown structure 30 of the stator core 200 are split structures, so that the winding coil 300 can be conveniently wound around the stator insulation framework 100 on the stator core 200.

The stator body 204 and the tooth crown structure 30 of the end stator core 50 are integrally formed. In consideration of insulation, the stator insulation framework 100 is injection molded in the slot structure 206 of the end stator core 50. This can reduce a quantity of parts and components of the stator assembly 400 and simplify a structure of the stator assembly 400.

In some embodiments of this application, for the same size boundary or volume, thrust of a cylindrical three-phase permanent magnet synchronous linear motor is greater than that of a cylindrical single-phase permanent magnet synchronous linear motor. Therefore, this application uses the cylindrical three-phase permanent magnet synchronous linear motor.

It will be noted that the stator assembly 400 in this application not only alleviates adverse impact of thrust fluctuation, but also solves a problem of winding difficulty caused by the tooth crown structure 30, thereby greatly improving performance of the linear motor. In addition, the stator assembly 400 in this application is practical and feasible, with a simple manufacturing process, which is conducive to mass production and practical application.

In some embodiments of this application, an insulation member is disposed between two adjacent stator cores 200, and the insulation member may be insulation paper, an insulation sheet, or the like. In this application, an example in which the insulation member is insulation paper is used for description. The insulation member can separate the two adjacent stator cores 200, to achieve effect of insulation between the two adjacent stator cores 200.

A linear motor according to embodiments of this application includes the stator assembly 400 in the foregoing embodiments. The tooth crown structure 30 is disposed on the outer circumferential wall of the stator body 204, so that magnetic resistance can be reduced. This can reduce thrust fluctuation of the linear motor, to improve operating performance of the linear motor.

As shown in FIG. 1, a suspension apparatus 500 according to embodiments of this application includes the linear motor in the foregoing embodiments. The linear motor is disposed on the suspension apparatus 500, so that magnetic resistance can be reduced. This can reduce thrust fluctuation of the linear motor, to improve operating performance of the linear motor, so as to improve operating performance of the suspension apparatus 500.

A vehicle according to embodiments of this application includes the suspension apparatus 500 in the foregoing embodiments, so that performance of the vehicle can be improved.

In the descriptions of this specification, a reference term such as "an embodiment", "some embodiments", "example embodiment", "example", "specific example", or "some examples" means that specific features, structures, materials, or characteristics described with reference to the embodiment or example is included in at least one embodiment or example of this application. In this specification, example expressions of the terms do not necessarily refer to the same embodiment or example. Moreover, the specific features, structures, materials, or characteristics described may be combined in any suitable manner in any one or more embodiments or examples.

Although embodiments of this application are shown and described, those of ordinary skill in the art will appreciate that various changes, modifications, substitutions, and variations may be made to the embodiments without departing from the principle and purpose of this application. The scope of this application is defined by the claims and their equivalents.

## Claims

1. A stator assembly (400) for a linear motor, comprising:
a plurality of layers of stator cores (200), the plurality of layers of stator cores (200) being sequentially stacked in an axial direction of the stator assembly (400), each of the stator cores (200) comprising a stator body (204) and a tooth crown structure (30), the tooth crown structure (30) being disposed on an outer circumferential wall of the stator body (204), and the tooth crown structure (30) and the stator body (204) jointly defining a slot structure (206) used for mounting a winding coil (300).

2. The stator assembly (400) for the linear motor according to claim 1, wherein stator bodies (204) of the plurality of stator cores (200) are formed as an integral part, and the stator body (204) is detachably connected to the tooth crown structure (30).

3. The stator assembly (400) for the linear motor according to claim 1 or 2, wherein the tooth crown structure (30) and the stator body (204) jointly define two slot structures (206), and in the axial direction of the stator assembly (400), the two slot structures (206) are respectively located on two sides of the stator core (200).

4. The stator assembly (400) for the linear motor according to any one of claims 1 to 3, wherein the tooth crown structure (30) comprises a tooth-crown main body (301) and a mounting boss (302) that are connected, the mounting boss (302) is located on a surface of the tooth-crown main body (301) facing the stator body (204), the outer circumferential wall of the stator body (204) has a mounting groove (205), the mounting boss (302) is fitted into the mounting groove (205), and the tooth-crown main body (301) and the stator body (204) jointly define the slot structure (206).

5. The stator assembly (400) for the linear motor according to claim 4, wherein the surface of the tooth-crown main body (301) facing the stator body (204) abuts against the outer circumferential wall of the stator body (204).

6. The stator assembly (400) for the linear motor according to claim 4 or 5, wherein the tooth-crown main body (301) comprises a first main body (303) and a second main body (304), the first main body (303) is connected between the mounting boss (302) and the second main body (304), and in the axial direction of the stator assembly (400), each of two sides of the second main body (304) protrudes from the first main body (303).

7. The stator assembly (400) for the linear motor according to claim 6, wherein in the axial direction of the stator assembly (400), the first main body (303) is located in an intermediate part of the second main body (304).

8. The stator assembly (400) for the linear motor according to any one of claims 1 to 7, wherein in a radial direction of the stator core (200), an axial size of at least a part of an outer circumferential wall of the tooth crown structure (30) gradually decreases from inside to outside.

9. The stator assembly (400) for the linear motor according to claim 8, wherein the outer circumferential wall of the tooth crown structure (30) is provided with a cut structure (305).

10. The stator assembly (400) for the linear motor according to claim 9, wherein there are a plurality of cut structures (305), and the plurality of cut structures (305) are arranged in the axial direction of the stator assembly (400).

11. The stator assembly (400) for the linear motor according to claim 10, wherein there are two cut structures (305), and in the axial direction of the stator assembly (400), the two cut structures (305) are respectively provided close to edges of the tooth crown structure (30).

12. The stator assembly (400) for the linear motor according to any one of claims 1 to 11, wherein there are a plurality of tooth crown structures (30), and the plurality of tooth crown structures (30) are disposed around the stator body (204) in a circumferential direction of the stator body (204).

13. The stator assembly (400) of the linear motor according to claim 12, wherein at least two adjacent tooth crown structures (30) are spaced apart to form an assembly space (201) between the two tooth crown structures (30).

14. A linear motor, comprising the stator assembly (400) according to any one of claims 1 to 13.

15. A suspension apparatus (500), comprising the linear motor according to claim 14.

16. A vehicle, comprising the suspension apparatus (500) according to claim 15.
